# EUROPEAN PATENT SPECIFICATION

(11) **EP 1 310 441 B1**
(45) Date of publication and mention of the grant of the patent: **12.10.2005**
(21) Application number: 01911776.1
(22) Date of filing: 17.03.2001
(51) Int. Cl.: B65G 1/137, B65G 37/00

(54) **OPTIMISED AUTOMATIC WAREHOUSE**
OPTIMIERTES AUTOMATISCHES LAGER
ENTREPOT AUTOMATIQUE OPTIMISE

(30) Priority: 17.05.2000 ES 200012570
(43) Date of publication of application: 14.05.2003
(73) Proprietor: Sanchez Gomez, Ginés, 28932 Mostoles (ES)
(72) Inventor: Sanchez Gomez, Ginés, 28932 Mostoles (ES)
(86) International application number: PCT/ES2001/000107
(87) International publication number: WO 2001/087744

(56) References cited:
- WO-A-00/17072
- ES-A- 305 393
- FR-A1- 2 304 413
- US-A- 3 709 353
- US-A- 4 527 937
- US-A- 4 561 820
- US-A- 4 842 122
- US-A- 5 452 786
- US-A- 6 139 240

## Description

### INVENTION BACKGROUND

Taking the following patent applications as a starting point, the aim is to obtain a more compact storage with less internal paths for the merchandise:
- PCT/ES99/ 298, dated 21 September, 1999, originally entitled 'Almacén automático' (Automatic Warehouse).
- PCT/ES00/ 82, dated 7 March, 2000, originally entitled 'Sistema de almacenamiento automático de especial aplicación a vehículos' (Automatic Storage System, especially Suitable for Vehicles).
   These two patent applications can be considered as the previous state of the technique covered by the invention I propose in this application-although it takes from them any elements, it combines them in such a way that the result is more efficient than separately.
- US-A-4527937 entitled "Automatic storage and distribution system", about a storage system having rows and columns of sloped storage lanes in this latter system, when a plurality of levels of product lanes are used, a separate main conveyor is provided for each level.

### INVENTION PRINCIPLES

The system relies on the following principles:

A circular conveyor belt (i.e., a belt whose points always follow a periodic path, such as those used to transport luggage at airports) with a rectangular shape.

All merchandises are in barcode-tagged parcels. Parcels must be considered in a generic sense. Therefore, a parcel may be a pallet, a package, a barrel, etc. There is not any problem if several parcels carry the same barcode, provided that their contents are consistent with the barcode. Thus, in the case of massive storage, two pallets containing the same type of detergent can carry the same barcode (if a certain rotation of the product is needed, the entry date in the warehouse can be used). In the case of a transportation agency, several parcels with the same destination may as well carry the same barcode.

An intake, placed on a side of the belt, where merchandise enters the system, equipped with photoelectric cells and tag readers. And an outlet, placed on the same side of the belt, which may consist of a divertor, also equipped with tag readers and photoelectric cells.

Otherwise, an access to this kind of belt can be either an intake or an outlet, provided it is equipped with tag readers and photoelectric cells both before and after the free space and divertor.

Finally, on the other two sides (opposite to each other) of the 'circular' belt, there are linear belts. The intake to these straight belts is on a side of the 'circular' belt, equipped with photoelectric cells, tag readers and divertors. The outlet is on the other side of the 'circular' belt and is equipped with tag readers.

The circular belt turns in the following direction: intake, intakes to linear belts, outlets from linear belts, outlet.

The following is a description of the two essential functions of the warehouse, i.e. parcel storing and recovering.

Parcel storing. The parcel is placed at the intake either manually or using a belt or mechanism. The parcel is carried on the belt and passes first through a photoelectric cell and then through the tag reader. The cell sends a signal to the computer both when it is switched on and off, which, however, will only be acknowledged if confirmed by a 'correct reading' message from the tag reader. The computer then determines the belt length occupied by the parcel by a simple calculation: occupied length = time between cell's on and off signals x belt speed. Depending on the length measured, the computer activates the divertors of the linear belts, which have free space for that parcel. When the parcel comes across the first divertor, this divertor enters it on the corresponding belt and the belt starts to move and determines its length and barcode with its photoelectric cell and tag reader. These data are transmitted to the computer, which finishes the operation and leaves the system standing by.

During these storage operations, if the parcel has not been successfully detected on input, there are two options: either let the parcel go around the circuit until it leaves it or make the parcel pass again through the intake (we are talking about a rotary belt).

Parcel recovering. The computer orders that all parcels between the end of the linear belt containing the desired parcel and the parcel itself be released, simply by activating the belt and stopping it when the barcode is detected at the outlet, while activating the divertor of that linear belt. All merchandise, except the desired parcel, is re-entered on its linear belt after being carried on the circular belt. The desired parcel, which is the last one, when passes through the tag reader, activates the divertor and it is released.

Obviously, most times parcels will be entered and released in groups. Therefore, placing these groups on the same linear belt can be really effort-saving.

The system can be further completed by multiple-level storage, i.e., by networks of belts, similar to the ones described, installed on levels connected to sloping conveyor belts. These would be very similar to an escalator.

### INDEX OF FIGURES

FIG. 1. Multiple-level warehouse in a top view,
FIG. 2. Multiple-level warehouse in a cross-sectional view,
FIG. 3. Another horizontal warehouse variation.

Numbering of elements in figures is the same for every one.

All figures are described in the following sections.

### DETAILED EMBODIMENT OF AN AUTOMATIC WAREHOUSE

The embodiment would consist in a multiple-level warehouse, each level of which similar to the previous one (except for the location of the intake/outlet). Firstly, every level will be described, then the belt-staircase connecting each one of them, and finally the overall operation.

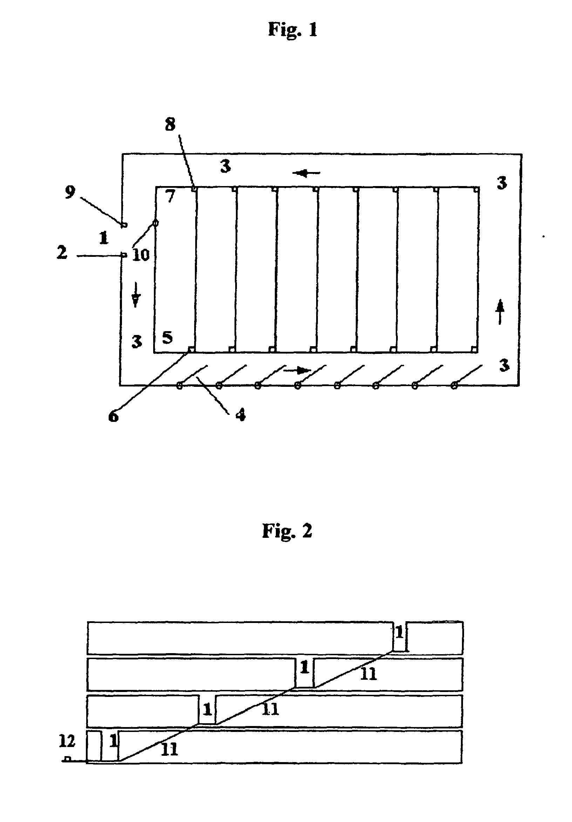

Storage level. A general overview is illustrated in FIG. 1.

The merchandise goes through (1), passing through the photoelectric cell and tag reader (2), entering the circuit (3), until it comes across one of the divertors (4), which drags it on its linear belt (5), and passing previously through the photoelectric cell and tag reader (5).

The merchandise goes out through the outlet at the linear belt (7), passing through the tag reader (8) and entering the circuit (3), which takes it to the outlet (1) by activating the divertor (10), which was in turn activated by the tag reader (9).

The intake and outlet of merchandises have already been explained.

Belt-staircase connecting the levels. The illustration in FIG. 2 represents a multiple-level warehouse pattern in which each level is similar to the previous one.

The staircase comprises so many flights (11) as the number of levels located above the first one, and these flights are simply conveyor belts. However, in order to prevent the merchandise from falling, the belts may be equipped with fixing elements. These elements can be rotary flanges separated in a regular way so that the merchandise does not go backwards while ascending or forwards while descending.

Each flight ends in a landing through which a level is accessed via its intake (1) by activating a divertor (not illustrated).

In the case of this embodiment, the belt-staircase goes upwards on the side of the levels and downwards on the most external part.

As for every intake, a photoelectric cell and a tag reader are located at the staircase's intake (12).

### General warehouse operation.

The merchandise enters the warehouse passing through the photoelectric cell and tag reader (12), which act in the same way as the (2) at the intake (1). Thus the computer estimates the parcel's length and activates the divertor of the 'landing' where the merchandise is supposed to be better placed. Once the merchandise enters each level, the operation is the same as already mentioned.

To recover the merchandise, and due to the actions that take place in its single-level warehouse, it is launched through (1) on to the corresponding 'landing', then it runs through the belt-staircase up to the top level, and then goes down again to the ground level, where it is delivered.

Both the ascent (intake) and the descent (outlet) may end on the same conveyor belt, provided that the intake has a divertor activated by the computer or the tag reader (12). The latter has not been illustrated.

### OTHER EMBODIMENTS OF THE WAREHOUSE

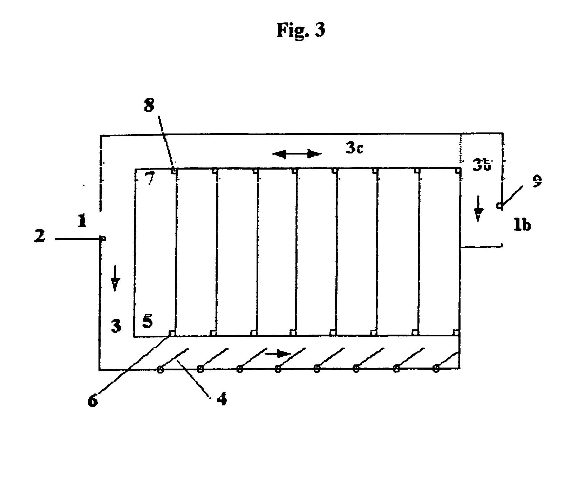

The single-level storage system can be modified as showed in FIG. 3. In this figure, instead of a circular belt (3), there are three linear belts (3) (3b) and (3c), and the outlet, instead of being placed on the same side as the intake (1), is on the opposite side (1b). The belt (3c) must be able to move in both directions. The input of merchandise is basically similar to the input mentioned for FIG. 1; however, for the output, the merchandise preceding (from the end) the desired one on its linear belt must be released and re-arranged first, thus taking advantage of the belt's reversibility (3c).

According to this layout, there would be two staircases: one ascending (on the side of the intakes), and one descending (on the side of the outlets). The arrows show the direction followed by the merchandise.

This layout would allow the belts-staircases to look more like ordinary staircases that change directions on every landing, which is very difficult (due to the complex linking systems required) in the case of two-direction belts-staircases. This would shorten the paths.

Furthermore, the stairs, in order to obtain less steep slopes, can go around the levels, in the same way as ancient ziggurats, obviously changing the direction the intakes-outlets of each level are facing. However, this could lengthen the path for the merchandise.

Another possibility is that the belts-staircases mentioned are moving staircases, replacing the divertors at landings by pushers. In that case, there would not be necessary that the moving staircases comprise backward elements.

There can also be an interconnection belt surrounding the whole warehouse. The first level would be accessed through the intakes and/or outlets from the belt itself, while the above levels would be accessed through the interconnection elevators, either using one elevator for all of them, one elevator for the ascent and one for the descent of all levels, an elevator for each level, or two elevators per level (one for the ascent and another one for the descent), depending on how quick the operation should be.

Finally, the belt-staircase or elevators can be cyclical, which allows to prepare orders for clients on a regular basis, since activating or deactivating directors or pushers would be enough.

In all cases, the linear storage belts can be sloped belts with rollers equipped with a braking system, so that the movement in the belt is caused by the action of gravity on the merchandise. The belt would be activated by simply releasing the brakes.

## Claims

1. A multiple-level warehouse, suitable for being computer-controlled, that enables the storing and recovering of previously barcode-tagged merchandise in a broad sense (pallets, boxes, barrels, etc.) comprising a single ascending interconnection device, being the same a belt-staircase or moving staircase (2.11) or elevator, linking several storage levels to the warehouse's intake and to each other, at the intake of the interconnection device there being a photoelectric cell and a tag reader (2.12), at the intake or outlet of each storage level there being a landing (2.1), the landings being linked to each other by flights of the interconnection device (2.11), at the intake of each storage level the interconnection device having also a divertor or pusher to divert the merchandise to that level, each storage level having an intake (1.1, 3.1) equipped with a photoelectric cell and a tag reader (1.2, 3.2) and an outlet (1.1, 3.1b) equipped with a divertor (1.10) and a tag reader (1.9, 3.9), storage taking place on linear storage belts (1.5, 3.5) accessed through a belt (1.3, 3.3) that connects them with the intake and where there are as many divertors (1.4, 3.4) as storage belts (1.5, 3.5) to receive the merchandise, each linear storage belt having a photoelectric cell and a tag reader at its intake (1.6, 3.6) and a tag reader at its outlet (1.8, 3.8), the outlet of the storage belts ending in another belt that connects them with the outlet (1.3, 3.3c, 3.3b) and also with the intakes to storage belts (1.3, 3.3).

2. A warehouse according to Claim 1 **characterised by** only one interconnection device, being the same a opened or closed belt-staircase or moving staircase (2.11) or cyclical elevator, linking all levels, rising from the first level to the last one, then changing directions, and going down, the intakes and outlets of each level coincide physically (2.1), and the belts transporting the merchandise to the storage belts within one level are a unique closed belt (1.3), basically of a rectangular shape, whose path is intake to level, intake to storage belts, outlet from storage belts, outlet from level.

3. A warehouse according to Claim 1 **characterised by** adding a second descending output interconnection device, being the same a belts-staircase or moving staircase or elevator (3.1 b), the intake and outlet of each level being located on opposite sides of the rectangle, the belt that recovers the outgoing merchandise from the storage belts (3.3c) continuing in two belts: one in which the merchandise is carried to the storage belts (3.3), and another one that runs to the outlet level (3.3b).

4. A warehouse according to Claim 2, **characterised by** the basically square shape of the levels and by the belt-staircase or moving staircase surrounding this structure, accessing to the storage levels from all four sides.

5. A warehouse according to Claims 1 or 3 **characterised in that** the belts-staircases or moving staircases change directions in every landing.

6. A warehouse according to Claims 2 or 4, **characterised in** having the outlet of the closed belt-staircase or moving staircase equipped with a divertor and a tag reader.

7. A warehouse according to Claims 1 or 3 **characterised in that** linear storage belt having its intakes and outlets on one first level closed interconnection belt surrouding the storage belts, through interconnection elevators.

8. A warehouse according to Claims 1 to 7, and comprising linear storage belts, **characterised by** being made of rollers with a slope and a braking system, the movement being caused by the action of gravity upon the merchandise, the belt is activated by releasing the braking system.

9. Computer-controlled method for storing and recovering merchandise into a multilevel warehouse, for a barcode-tagged merchandise in a broad sense (pallets, boxes, barrels, etc.), comprising
- storing the merchandise comprising
- measuring and identifying the merchandise by means of a photoelectric cell and a tag reader (2.12),
- selecting by means of a computer an appropriate level for storing the merchandise,
- activating a divertor or pusher of a landing (2.1, 3.1),
- remeasuring and reidentifying the merchandise on each level by means of a photoelectric cell and tag reader (1.2, 3.2),
- activating a divertor (1.4, 3.4) of an appropriate linear storage belt (1.5, 3.5) for storing the merchandise,
- confirming to the computer the storing of the merchandise at each intake linear storage belt (1.5, 3.5) by means of a photoelectric cell and tag reader (1.6, 3.6),
- recovering the merchandise comprising
- activating a level connection belt (1.3, 3.3c, 3.3), the lineal storage belt (1.5, 3.5) and the divertor of the linear storage belt (1.4, 3.4),
- informing to the computer by means of an outlet tag reader (1.8, 3.8) that the merchandise preceding the desired one has passed, stopping the linear storage belt (1.5, 3.5),
- storing again the merchandise preceding the desired one on the linear storage belt (1.5, 3.5),
- deactivating the divertor of the lineal storage belt (1.5, 3.5) and activating again the lineal storage belt (1.5, 3.5),
- informing to the computer by means of the outgoing lineal belt tag reader (1.8, 3.8) which the desired merchandise has gone out of the lineal storage belt (1.5, 3.5),
- taking out the warehouse the merchandise through the level connection belt (1.3, 3.3b, 3.3), a level outlet (1.1, 3.1b) and an interconnection device (2.11).

10. Computer-controller method according to claim 9, when the interconnection device linking all the levels is closed, comprising ascending the merchandise to the summit of the interconnection device and then descending until taking out the warehouse from the interconnection device.

11. Computer-controller method for rearranging merchandise, according to claim 9, when the connection belt into each level is closed and the interconnection device is also closed, comprising taking any merchandise located anywhere of the warehouse to another place of the warehouse by activating the divertors or pushers of the landings (2.1), the linear storage belts (1.4), or the level outlets (1.1).

12. Computer-controlled method for preparing client orders according to claim 11, comprising storing the merchandise of the same type in specific linear storage belts and assigning to each client one or several empty linear storage belts.

## Patentansprüche

1. Lager mit mehreren Lageretagen, das von einem Computer gesteuert werden kann und das es ermögticht, mit Streifencoden etikettierte Ware im weitgehenden Sinne als Paletten, Kartons oder Fässer zu lagern und auszuliefern, umfassend eine einzige aufsteigende Verbindungseinrichtung, bei der es sich um ein Stufenband oder eine Rolltreppe (2.11) und/oder einen Aufzug handelt, welche mehrere Lageretagen mit dem Lagereingang und untereinander verbindet, wobei am Eingang der Verbindungseinrichtung eine Photozelle und ein Etikettenleser (2.12) vorgesehen und am Eingang oder Ausgang jeder Lageretage Podeste (2.1) vorhanden sind, die durch Strecken der Verbindungseinrichtung (2.11) miteinander verbunden werden, und am Eingang von der Verbindungseinrichtung zu jeder Lageretage ein Ablenkmechanismus und/oder ein Schieber zur Verfügung steht, um die Ware den einzelnen Lageretagen zuzuführen, die jeweils einen Eingang (1.1, 3.1) mit einer Phoptozelle (1.10) und einem Etikettenleser (1.2, 3.2) aufweisen und in denen die Ware auf linearen Lagerbändern (1.5, 3.5) gelagert werden, die über ein Band (1.3, 3.3) zugänglich sind, das dieselben mit dem Eingang verbindet, der zur Aufnahme der Ware über eine der Anzahl der Lagerbänder (1.5, 3.5) entsprechende Anzahl von Ablenkvorrichtungen (1.6, 3.6) verfügt, während jedes lineare Lagerband am Eingang eine Photozelle und einen Etikettenleser (1.6, 3.6) und am Ausgang einen Etikettenleser (1.8, 3.8) aufweist und die Ausgänge der Lagerbänder in einem weiteren Band enden, das die Verbindung zum Ausgang (1.3, 3.3c, 3.3b) und zu den Eingängen der Lagerbänder (1.3, 3.3) herstellt.

2. Lager nach Anspruch 1, **gekennzeichnet durch** eine einzige Verbindungseinrichtung, bei der es sich um ein offenes oder geschlossenes Stufenband, eine Rolltreppe (2.11) oder einen zyklischen Aufzug handelt, welche alle Lageretagen miteinander verbindet, von der ersten Etage bis zur letzten hochfährt, dort die Richtung wechselt und wieder herunterfährt, wobei die Eingänge und Ausgänge der einzelnen Lageretagen (2.1) übereinstimmen und die Bänder, welche die Ware innerhalb der einzelnen Lageretagen transportieren, ein einziges geschlossenes Band (1.3) mit im Wesentlichen rechteckiger Form sind, dessen Verlauf den Eingang zur Lageretage, die Eingänge der Lagerbänder, den Ausgang der Lagerbänder und den Ausgang der Lageretage umfasst.

3. Lager nach Anspruch 1, **dadurch gekennzeichnet, dass** eine zweite Ausgangs-Verbindungseinrichtung vorgesehen ist, bei der es sich um einen Stufenband, eine Rolltreppe oder einen Aufzug (3.1b) handelt, dass sich der Eingang und der Ausgang der einzelnen Lageretagen an gegenüberliegenden Seiten eines Rechtecks befinden, dass sich das Band zum Abnehmen der Ware von den Lagerbändern (3.3c) in zwei Bändern fortsetzt, von denen das eine die Ware zu den Lagerbändern (3.3) transportiert und das andere zum Ausgang der Lageretage (3.3b) führt.

4. Lager nach Anspruch 2, **dadurch gekennzeichnet, dass** die Lageretagen eine im Wesentlichen viereckige Form haben und dass das Stufenband und/oder die Rolltreppe diese Struktur umgeben und die Lageretagen von ihren vier Seiten her zugänglich sind.

5. Lager nach Anspruch 1 oder 3, **dadurch gekennzeichnet, dass** die Stufenbänder oder Rolltreppen ihre Richtung auf jedem Podest ändern.

6. Lager nach Anspruch 2 oder 4, **dadurch gekennzeichnet, dass** der Ausgang des geschlossenen Stufenbandes und/oder der geschlossenen Rolltreppe mit einem Ablenkmechanismus und einem Etikettenleser ausgestattet ist.

7. Lager nach Anspruch 1 oder 3, **dadurch gekennzeichnet, dass** die Lagerbänder ihre Eingänge und Ausgänge auf einem Verbindungsband in der ersten Etage haben, das die Lagerbänder über Aufzüge umgibt.

8. Lager nach den Anspüchen 1 bis 7, **dadurch gekennzeichnet, dass** es sich bei den linearen Lagerbändern um Rollen mit einer Neigung und einem Bremssystem handelt und dass die Bewegung der Lagerbänder durch die Wirkung der Schwerkraft auf die Ware hervorgerufen wird, wobei das Lagerband betätigt wird, sobald sich das Bremssystem entspannt.

9. Computergesteuertes Verfahren zur Lagerung und Auslieferung von Ware in einem mehrstöckigen Lager, für im weitgehenden Sinne mit Streifencoden etikettierte Ware in Form von Paletten, Kartons oder Fässern, umfassend
- die Lagerung von Ware, wozu gehört
- Messung und Identifikation der Ware mit Hilfe einer Photozelle und eines Etikettenlesers (2.12),
- computergesteuerte Auswahl einer für die Lagerung der Ware geeigneten Etage,
- Betätigung einer Ablenkvorrichtung und/oder eines Schiebers eines Podestes (2.1, 3.1),
- erneute Messung und erneute Identifikation der Ware auf jeder Lageretage an Hand einer Photozelle und eines Etikettenlesers (1.2, 3.2),
- Betätigung einer Ablenkvorrichtung (1.4, 3.4) eines für die Lagerung der Ware geeigneten linearen Lagerbandes (1.5, 3.5),
- Bestätigung der Lagerung der Ware in jeder Lageretage (1.5, 3.5) an den Computer über die Photozelle und den Etikettenleser (1.6, 3.6),
- die Auslieferung der Ware, wozu gehört
- Betätigung eines Anschlussbandes der Lageretage (1.3, 3.3c, 3.3) des linearen Lagerbandes (1.5, 3.5) und der Ablenkvorrichtung des linearen Lagerbandes (1.4, 3.4),
- Benachrichtigung des Computers über einen Etikettenlesers (1.8, 3.8), dass die der gewünschten Ware vorangehende Ware vorbeigelaufen ist und Anhalten des linearen Lagerbandes (1.5, 3.5),
- erneute Anordnung der der gewünschten Ware vorangehenden auf dem linearen Transportband (1.5, 3.5),
- Abschalten der Ablenkvorrichtung des linearen Lagerbandes (1.5, 3.5) und erneute Betätigung des linearen Lagerbandes (1.5, 3.5),
- Benachrichtigung des Computers über den Etikettenlesers am Ausgang des linearen Lagerbandes (1.8, 3.8), dass die gewünschte Ware vom linearen Lagerband (1.5, 3.5) gelaufen ist,
- Ausbringen der Ware aus dem Lager über das Anschlussband der Lageretage (1.3, 3.3b, 3.3), einen Ausgang der Lageretage (1.1, 3.1b) und eine Verbindungseinrichtung (2.11).

10. Verfahren nach Anspruch 9, wenn die die einzelnen Lageretagen verbindende Verbindungseinrichtung geschlossen ist, umfassend das Hochfahren der Ware bis zur Kuppe der Verbindungseinrichtung und das darauffolgende Absenken der Ware, bis sie von der Lagervorrichtung aus aus dem Lager transportiert wird.

11. Verfahren zur neuen Anordnung der Ware nach Anspruch 9, wenn das Anschlussband innerhalb der einzelnen Lageretagen und auch die Verbindungseinrichtung geschlossen sind, das den Transport der Ware von jedem Punkt des Lagers zu einem anderen Punkt des Lagers umfasst, wobei die Ablenkvorrichtungen oder Schieber der Podeste (2.1), die linearen Lagerbänder (1.4) oder die Ausgänge der Lageretage (1.1) betätigt werden.

12. Verfahren zur Vorbereitung von Kundenaufträgen nach Anspruch 11, das die Lagerung der Ware ein und derselben Art auf spezifischen linearen Lagerbändern und die Zuweisung eines oder mehrerer linearer Lagerbänder für die einzelnen Kunden umfasst.

## Revendications

1. Un magasin à plusieurs étages de stockage, susceptible d'être commandé par ordinateur, qui permet au sens large de stocker et de récupérer de la marchandise étiquetée avec un code barres, telle que des palettes, des caisses, des bidons, comprenant un seul dispositif d'interconnexion ascendant, ce dispositif étant une bande-escalier ou un escalier mécanique (2.11) ou un ascenseur, raccordant plusieurs étages de stockage à l'entrée du magasin et entre eux, ayant à l'entrée du dispositif d'interconnexion, une cellule photoélectrique et un lecteur d'étiquettes (2.12), ayant à l'entrée ou à la sortie de chaque étage de stockage un palier (2.1), les paliers étant raccordés entre eux par des tronçons du dispositif d'interconnexion (2.11), l'entrée de chaque étage de stockage disposant depuis le dispositif d'interconnexion d'un déflecteur ou d'un poussoir pour dériver la marchandise vers chaque étage de stockage, chaque étage de stockage disposant d'une entrée (1.1, 3.1) équipée d'une cellule photoélectrique et d'un lecteur d'étiquettes (1.2, 3.2) ainsi que d'une sortie (1.1, 3.1b) équipée d'un déflecteur (1.10) et d'un lecteur d'étiquettes (1.9, 3.9), stockant la marchandise sur des bandes de stockage linéaires (1.5, 3.5) accessibles à travers une bande (1.3, 3.3) qui les raccorde à l'entrée qui dispose d'autant de déflecteurs (1.4, 3.4) que de bandes de stockage (1.5, 3.5) pour recevoir la marchandise, chaque bande de stockage linéaire disposant d'une cellule photoélectrique et d'un lecteur d'étiquettes à son entrée (1.6, 3.6) ainsi que d'un lecteur d'étiquettes à sa sortie (1.8, 3.8), les sorties des bandes de stockage finissant sur une autre bande qui les raccorde à la sortie (1.3, 3.3c, 3.3b) ainsi qu'aux entrées aux bandes de stockage (1.3, 3.3).

2. Un magasin conformément à la revendication 1 **caractérisé en** un seul dispositif d'interconnexion, celui-ci étant une bande-escalier ou un escalier mécanique (2.11), ouverts eu fermés, ou un ascenseur cyclique, raccordant tous les étages de stockage, montant du premier niveau au dernier, changeant alors de direction et descendant, les entrées et les sorties de chaque étage de stockage (2.1) coïncidant physiquement, et les bandes qui transportent la marchandise de chaque étage de stockage étant une seule bande fermée (1.3), de forme essentiellement rectangulaire, dont le trajet est entrée à l'étage de stockage, entrées aux bandes de stockage, sortie des bandes de stockage, sortie de l'étage de stockage.

3. Un magasin conformément à la revendication 1 **caractérisé en** l'ajout d'un deuxième dispositif d'interconnexion de sortie, celui-ci étant une bande-escalier ou un escalier mécanique ou un ascenseur (3.1b), l'entrée et la sortie de chaque étage de stockage étant situés sur les côtés opposés d'un rectangle, la bande pour récupérer la marchandise des bandes de stockage (3.3c) continuant sur deux bandes, une qui amène la marchandise aux bandes de stockage (3.3), et l'autre qui se dirige vers la sortie de l'étage de stockage (3.3b).

4. Un magasin conformément à la revendication 2, **caractérisé en ce que** les étages de stockage possèdent une forme essentiellement carrée et **en ce que** la bande-escalier ou escalier mécanique entoure cette structure, en accédant aux niveaux de stockage par leurs quatre côtés.

5. Un magasin conformément aux revendications 1 ou 3 **caractérisé en ce que** les bandes-escaliers ou escaliers mécaniques changent de direction sur chaque palier.

6. Un magasin conformément aux revendications 2 ou 4, **caractérisé en ce que** la sortie de la bande-escalier ou escalier mécanique fermé sont équipés d'un déflecteur et d'un lecteur d'étiquettes.

7. Un magasin conformément à la revendication 1 ou 3 **caractérisé en ce que** les bandes de stockage ont leurs entrées et leurs sorties sur une bande d'interconnexion au premier étage, entourant les bandes de stockage, à travers des ascenseurs d'interconnexion.

8. Un magasin conformément aux revendications 1 à 7, et **caractérisé en ce que** les bandes de stockage linéaires sont à rouleaux, avec une pente et un système de freinage, le mouvement des bandes de stockage étant causé par l'action de la gravité sur la marchandise, la bande de stockage étant activée lorsque le système de freinage est relâché.

9. Procédure contrôlée par ordinateur pour stocker et récupérer la marchandise dans un magasin à plusieurs étages, pour des marchandises étiquetées avec un code-barres au sens large telles que des palettes, des caisses, des bidons, comprenant
- stocker la marchandise comprenant
- mesurer et identifier la marchandise au moyen d'une cellule photoélectrique et d'un lecteur d'étiquettes (2.12),
- sélectionner par ordinateur un étage adéquat pour stocker la marchandise,
- activer un déflecteur ou un poussoir d'un palier (2.1, 3.1),
- re-mesurer et ré-identifier la marchandise à chaque étage de stockage au moyen d'une cellule photoélectrique et d'un lecteur d'étiquettes (1.2, 3.2),
- activer un déflecteur (1.4, 3.4) d'un étage de stockage linéaire adéquat (1.5, 3.5) pour stocker la marchandise,
- confirmer à l'ordinateur le stockage de la marchandise à chaque étage de stockage (1.5, 3.5) au moyen d'une cellule photoélectrique et d'un lecteur d'étiquettes (1.6, 3.6),
- récupérer la marchandise comprenant
- activer une bande de connexion de l'étage de stockage (1.3, 3.3c, 3.3), la bande de stockage linéaire (1.5, 3.5) et le déflecteur de la bande de stockage linéaire (1.4, 3.4),
- informer l'ordinateur au moyen d'un lecteur d'étiquettes (1.8, 3.8) que la marchandise précédant celle désirée est passée, en arrêtant la bande de stockage linéaire (1.5, 3.5),
- stocker à nouveau la marchandise précédant celle désirée sur la bande de stockage linéaire (1.5, 3.5),
- désactiver le déflecteur de la bande de stockage linéaire (1.5, 3.5) et réactiver la bande de stockage linéaire (1.5, 3.5),
- informer l'ordinateur au moyen du lecteur d'étiquettes de sortie de la bande de stockage linéaire (1.8, 3.8) que la marchandise désirée est sortie de la bande de stockage linéaire (1.5, 3.5),
- sortir du magasin la marchandise à travers la bande de raccordement de l'étage de stockage (1.3, 3.3b, 3.3), une sortie de l'étage de stockage (1.1, 3.1b) et un dispositif d'interconnexion (2.11).

10. Procédure conformément à la revendication 9, lorsque le dispositif d'interconnexion qui raccorde tous les étage de stockage est fermé, comprenant monter la marchandise tout en haut du dispositif d'interconnexion et descendre alors la marchandise jusqu'à sortir la marchandise du magasin depuis le dispositif de stockage.

11. Procédure pour replacer la marchandise, conformément à la revendication 9, lorsque la bande de connexion à l'intérieur de chaque étage de stockage est fermée et le dispositif d'interconnexion est également fermé, comprenant amener n'importe quelle marchandise de n'importe quel endroit du magasin, à un autre lieu du magasin en activant les déflecteurs ou poussoirs des paliers (2.1), les bandes de stockage linéaires (1.4), ou les sorties d'étage de stockage (1.1).

12. Procédure pour préparer des commandes de clients conformément à la revendication 11, comprenant stocker la marchandise d'un même type sur des bandes spécifiques de stockage linéaires et en assignant à chaque client une ou plusieurs bandes de stockage linéaires.
